# EUROPEAN PATENT APPLICATION

(11) **EP 2 538 306 A1**
(43) Date of publication of application: **26.12.2012**
(21) Application number: 11170616.4
(22) Date of filing: 20.06.2011
(51) Int. Cl.: G06F 3/033, G06F 3/044, G06F 3/045, G06F 3/041, G06F 3/048

(54) **Pressure detecting user input device**

(71) Applicant: Research In Motion Limited, Waterloo, ON N2L 3W8 (CA)
(72) Inventor: Lee, John Jong-Suk, Waterloo, Ontario N2L 3W8 (CA); Wang, Sherman, Waterloo, Ontario N2L 3W8 (CA); Santo, William Donald, Waterloo, Ontario N2L 3W8 (CA)
(74) Representative: Noble, Nicholas

(57) **Abstract**

A pressure sensitive device (250) and operating method (1200) thereof that detects a location and magnitude of an applied pressure. The device has a base (202) and a deformable surface (204) that enclose a deformable material that has an electrical impedance. Impedance measurements are made at multiple points along the base and the deformable surface. A contour (310, 420) of the deformable surface, caused by the applied pressure, is estimated. The position of the pressure relative to the center of the device is estimated based on contour and is interpreted as a user input specifying a direction. The amount of applied pressure is also estimated based on contour and is interpreted as a user input specifying a magnitude. The user input specifying location direction and magnitude is provided to processing for any application, such as controlling a user interface.

## Description

### FIELD OF THE DISCLOSURE

The present disclosure generally relates to user interfaces for electronic devices and more particularly to force sensitive user input sensors.

### BACKGROUND

Advances in electronic circuits and other components included in electronic devices allow ever decreasing electronic device enclosures. With some electronic devices, such as portable or handheld electronics including cellular phones and the like, the small size of their cases or of the enclosures of the device limits the amount of area available to place user interface devices. In addition to alpha-numeric keyboards, portable electronic devices often include a display on which a user is able to move a displayed cursor or other graphical user interface element on the display in one or two dimensions in order to select a displayed item or a function to execute. User interface input devices to allow a user to move the displayed cursor include arrow keys, trackballs, and trackpads. In addition to moving the displayed cursor in a particular direction, it is desired that a user interface input device be able to allow control of the speed that the displayed cursor moves across the devices' display. Controlling the speed of a displayed cursor's movement is accomplished by, for example, the speed or length of moving a finger across a trackpad or by increasing the speed of movement with time as a key or trackpad is continuously pressed by a user. It is difficult to incorporate into a small portable electronic device a trackpad that allows detecting movement over a significant length. A trackpad with sufficient area displaces other objects on the surface of the devices case or requires the case to be larger to accommodate the larger trackpad.

Therefore, the size of speed controlling user input devices limits design flexibility for device cases.

### BRIEF DESCRIPTION OF THE DRAWINGS

The accompanying figures where like reference numerals refer to identical or functionally similar elements throughout the separate views, and which together with the detailed description below are incorporated in and form part of the specification, serve to further illustrate various embodiments and to explain various principles and advantages all in accordance with the present disclosure, in which:

FIG. 1 illustrates a portable electronic device with a pressure detecting user input device in accordance with one example;

FIG. 2 illustrates a pressure detecting user input device sensor configuration, in accordance with one example;

FIG. 3 illustrates a slightly deformed pressure detecting user input device, according to one example;

FIG. 4 illustrates a highly deformed pressure detecting user input device in accordance with one example;

FIG. 5 illustrates a top view of a left horizontal lightly pressed pressure detecting user input device, in accordance with one example;

FIG. 6 illustrates a top view of a left horizontal deeply pressed pressure detecting input sensor, in accordance with one example;

FIG. 7 illustrates a top view of a centrally lightly pressed pressure detecting user input device, in accordance with one example;

FIG. 8 illustrates a top view of a centrally deeply pressed pressure detecting user input device, in accordance with one example;

FIG. 9 illustrates a top view of a bottom vertical lightly pressed pressure detecting user input device, in accordance with one example;

FIG. 10 illustrates a top view of a bottom vertical deeply pressed pressure detecting user input device, in accordance with one example;

FIG. 11 illustrates a capacitance determination configuration, in accordance with one example;

FIG. 12 illustrates a pressure detecting user input device operating process, in accordance with one example; and

FIG. 13 is a block diagram of an electronic device and associated components in which the systems and methods disclosed herein may be implemented.

### DETAILED DESCRIPTION

As required, detailed embodiments are disclosed herein; however, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically.

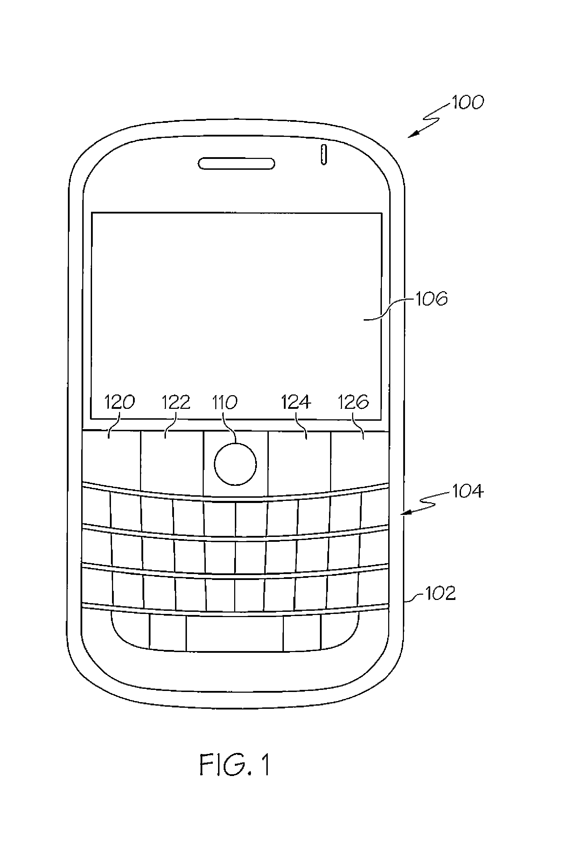

FIG. 1 illustrates a portable electronic device 100 with a pressure detecting user input device 110 in accordance with one example. The portable electronic device 100 in this example is a portable smartphone that supports cellular voice communications and also data communications with a central network. In one example, the electronic device 100 performs data communications with a wireless network to support accessing and exchanging data over the Internet. Data received by the electronic device is displayed on a display 106, which is able to be an alpha-numeric only display or a graphical display. In one example, the display 106 presents a graphical user interface for a user to access functions and to receive information.

The electronic device 100 is housed within a device case 102. The display 106 mounts on a surface of the device case 102. An alpha-numeric keyboard 104 is also physically coupled to the same surface of the device case 102 as the display 106. In various examples, the alpha-numeric keyboard 104 is able to be a QWERTY keyboard, a numeric telephone keypad, or any suitable user input device, including a "soft" or "virtual" keyboard implemented, for example, by rendering images of keys on a touch sensitive display.

The device case 102 further includes a number of function keys. The illustrated device case 102 has a first function key 120, a second function key 122, a third function key 124, and a fourth function key 126. These function keys are able to be associated with a dedicated function, such as presenting an interface to initiate a voice call whenever pressed, or the function key is able to be associated with different functions based upon a current operating mode of the electronic device 100.

The device case 102 further has a pressure detecting user input device 110. The design and operation of the pressure detecting user input device 110 is described in further detail below. The pressure detecting user input device 110 of one example is a pressure sensitive device that a user presses with a finger and that determines a location of a user's pressing as well as a magnitude of pressure exerted by the user onto the pressure detecting user input device 110. In one example, the pressure detecting user input device 110 detects the position of a user's finger relative to the center of the pressure detecting user input device 110 and the amount of pressure with which the user's finger presses. Based upon the position of the pressing relative to the center of the pressure detecting user input device 110 and the amount of that pressure, a user input direction and magnitude is determined. In one operating mode of the electronic device 100, processing determines a direction to move a user interface element based upon the location of pressing, and determines a magnitude, such as distance to move the element or speed with which to move the element, based upon the pressure. In various examples, the pressure detecting user input device 110 determines the differences in state and the relative positions of two surfaces of the device as are affected by a user's pressing of one surface of the device. In various examples, the pressure detecting user input device 110 is able to incorporate transducers that determine one or more of pressure, capacitive changes between sensors, resistive changes between sensors, or changes in distance between the two surfaces of the device.

The diameter of the pressure detecting user input device 110 in this example is approximately twice the size of an expected contact area of a user's finger with the surface of the pressure detecting user input device 110. A pressure detecting user input device 110 with a diameter approximately twice the expected area of a user's finger allows a very small sized device to be effectively used to accept two-dimensional input comprising both a two dimensional direction component and a magnitude. In this example, a user is able to locate a finger within a ring formed around the center of the pressure detecting user input device 110 to specify a user input direction, where that ring is approximately the width of the user's finger. The size of the pressure detecting user input device 110 does not provide the user much variation in the distance of pressing from the center of the pressure detecting user input device 110 and does not accept a magnitude of a user input based upon the location of the pressing relative to the center of the pressure detecting user input device 110. In other words, there is little room to allow the user to indicate movement simply based upon the distance the user's finger moves across the surface of the pressure detecting user input device 110. The user, instead of varying the location of pressure across the input device, specifies a magnitude by varying the amount of pressure placed on the pressure detecting user input device 110.

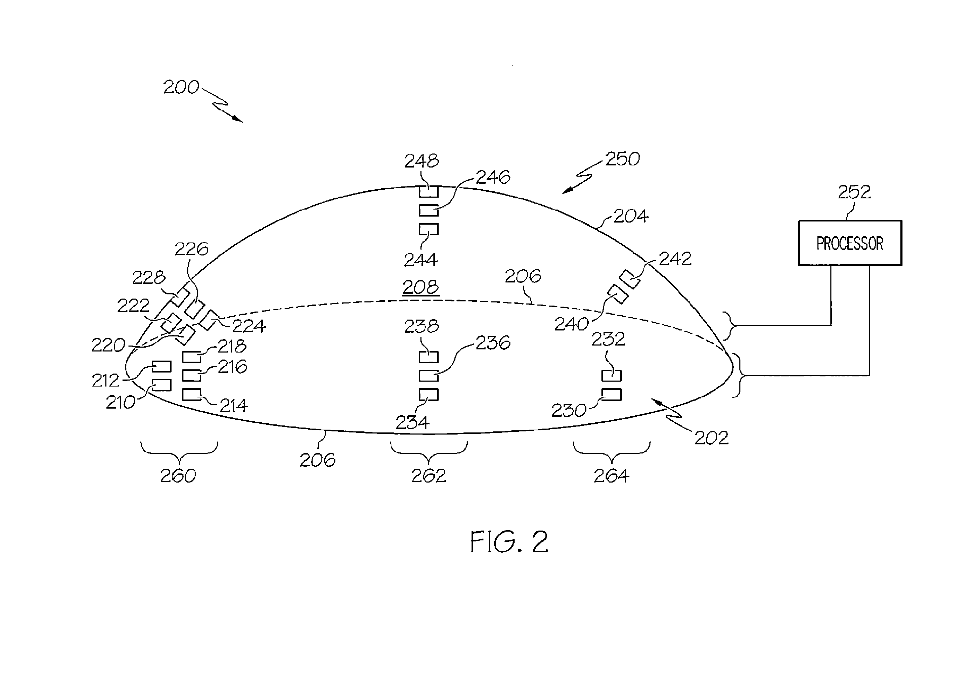

FIG. 2 illustrates a pressure detecting user input device sensor configuration 200, in accordance with one example. The pressure detecting user input device sensor configuration 200 illustrates a view of a pressure detecting user input device 250. The pressure detecting user input device 250 is an example of the pressure detecting user input device 110 discussed above. The illustrated pressure detecting user input device sensor configuration 200 depicts a base 202 and a deformable surface 204 of the pressure detecting user input device 250. The deformable surface 204 in this example is a flexible surface. In particular the deformable surface 204 is a flexible, domed shape membrane that is illustrated as a transparent surface so as to allow viewing of the base 202 and several of the sensors that are incorporated into the pressures sensing input device 250. Deformable surfaces 204 made of opaque or translucent surfaces are also able to be used. A user is able to depress a portion of the deformable surface 204 by pressing down on that surface. In one example, the deformable surface 204 is made of a silicone rubber material. Deformable surfaces made of other flexible materials, deformable materials, or that provide an otherwise pressure responding surface are also possible.

The base 202 in one example is flat and has a circular footprint that extends along a base plane. The deformable surface 204 has a correspondingly circular rim 206 that is connected to the circumference of the base 202. The deformable surface 204 is positioned above the base 202 and a volume 208 is formed between the base 202 and the deformable surface 204. Other shapes, such as devices with a square base or a base of any arbitrary shape, are also able to be used. Further, the deformable surface 204 is able to have any shape such as the illustrated convex dome shape or any suitable alternative shape such as a box shape, a concave shape, or any desired shape.

In one example, the volume 208 between the base 202 and the deformable surface 204 is filled with a dielectric material, such as a dielectric gel. An example of a suitable dielectric gel used to fill the volume between the base 202 and the deformable surface 204 is a silicone based gel that contains metallic filings. Other dielectric materials, such as liquids, gasses, yieldable solids, and the like, are able to be used to fill this space. The dielectric material within the volume 208 is in contact with both the base 202 and the deformable surface 204. The dielectric material therefore is in contact with and conforms to the shape of the deformable surface 204.

In operation, a user is able to depress a portion of the deformable surface 204 to deform its flexible surface and cause the dielectric material that was within the deformed portion of the volume 208 to move to other portions of the volume 208. As the dielectric material moves into those other portions of the volume 208, the portions of the deformable surface 204, which is made of a flexible material such as silicone rubber, that are not depressed by the user are also deformed to make room for that displaced dielectric material.

In one example, the base 202 and deformable surface 204 are both lined with small electrical sensors over the entire interior of the volume 208. These electrical sensors include electrical conductors that are each physically coupled to either the base 202 or the deformable surface 204. In the following description, the conductive elements mounted on or physically coupled to the pressures sensing input device 250 are referred to as "sensors." In one example, each sensor includes a small electrically conductive area that forms one plate of a capacitor. Each of these electrical conductors or sensors is able to have any suitable shape, such as a plate, wire segment, printed conductor segment, and the like.

As described in detail below, a processor 252 is communicatively coupled to each of these small electrical sensors and measures the capacitance between each of the conductors of sensors on the base 202 and one or more corresponding conductors of sensors on deformable surface 204. The processor 252 of one example measures capacitance by applying an alternating current (AC) signal to each sensor on the base 202 and measures the signal received by one or more corresponding sensors on the deformable surface 204. Based on these measurements, the processor determines measured changes in capacitance between sensors over time. A decrease in signal level between the applied AC signal and the signal received by corresponding sensors is proportional to a decrease in capacitance between those two sensors.

The capacitance between sensors on the deformable surface 204 and sensors on the base 202 varies as a user presses the flexible deformable surface 204 because the distances between the respective sensors on those two surfaces changes. In particular, distances between sensors on the deformable surface 204 and on the base 202 decrease in an area where the user presses on the deformable surface 204. Distances also are able to increase between sensors on the deformable surface 204 and the base 202 in areas removed from the user's pressing because the dielectric material in the depressed area is displaced and moves to other portions of the volume 208.

By measuring changes in capacitance between, for example, each sensor across the surface of the base 202 and one or more corresponding sensors on the deformable surface 204, a contour or a change in physical contour of the deformable surface 204 is able to be estimated. Analysis of this estimated contour is able to provide an estimate of a location of a depression of the deformable surface 204 that is caused by, for example, a user's pressing on an area of the deformable surface 204. In one example, the location of a user's pressing of the deformable surface 204 is estimated by detecting an increase in capacitance between one or more sensors on the base 202 and corresponding sensors on the deformable surface 204. This increase in capacitance occurs in this example because the sensors on the base 202 and the deformable surface 204 move closer together as the user depresses that portion of the deformable surface 204. In further examples, a more complex analysis of the estimated contour or changes in contour of the deformable surface 204, such as analyses incorporating curve fitting, spatial noise reduction, time domain filtering, and the like, are included to refme an estimate of the location and magnitude of a depression of the deformable surface 204.

The volume 208 of one example is filled with a viscous material, such as a metallic filing filled silicone gel. This viscous material supplies a resistance to depressing the deformable surface 204 and allows the user to adjust how much the deformable surface 204 is depressed by varying an amount of force by which the user presses down on the deformable surface 204. Measurement of the amounts of change in capacitance between sensors on the deformable surface 204 and the base 202 in the area of the user's pressing of the deformable surface 204 allows an estimation of the amount of depression of the deformable surface 204, and thereby the amount of force applied by the user in depressing the deformable surface 204. In one example, the amount of depression, or the amount of applied force, estimated by the pressure detecting user input device 250 is provided as an input command value to affect various user interface options. The responsiveness of the pressure detecting user input device 250 is able to be varied by selecting various viscosities for the material filling the volume 208.

The pressure detecting user input device sensor configuration 200 illustrates three sets of corresponding sensors that are present in a pressure detecting user input device 250. Each of these illustrated sets of corresponding sensors contains a subset of sensors physically coupled to the base 202, which are referred to as base conductors. Each of these illustrated sets also contains another subset of sensors physically coupled to the deformable surface 204, which are referred to as surface conductors. Within each set of corresponding sensors, the surface conductors are in proximity to being "above" the base conductors within that set of corresponding sensors. In operation, the capacitance is measured between a particular base conductor and a respective subset of surface conductors that are associated with the particular base conductor. The respective subset of conductors in one example consists of surface conductors within the set of corresponding sensors that also contain the particular base conductor, and are therefore associated with the particular base conductor. The respective subset of sensors in this example are within the same set of corresponding sensors on the deformable surface 204 as the sensors located on the base 202.

A processor 252 measures the capacitance values between sensors on the deformable surface 204 and the base 202 and determines, based on the measured capacitance values, the distance between the base 202 and the deformable surface 204 at the point of those sensors. This distance is related to the amount of depression of the deformable surface 204 in that area, and is used to control, for example, user interface displays or as a user input to other processing. In some examples, changes in capacitance or impedance are measured or determined to estimate a change in distance between portions of the deformable surface 204 and base 202. Various examples measure capacitances between one sensor on the base 202 and one sensor on the deformable surface 204, or measure capacitances between each sensor on the base 202 and several sensors on the deformable surface 204. In one example, the multiple capacitance values measured from one sensor on the base 202 to several sensors on the deformable surface 204 are combined, such as by averaging.

A first set of corresponding sensors 260 shows five pairs of sensors near an edge of the pressure detecting user input device 250, a second set of corresponding sensors 262 shows three pairs of corresponding sensors near the center of the pressure detecting user input device 250, and a third set of corresponding sensors 264 shows two pairs of corresponding sensors near an edge of the pressure detecting user input device 250 that is opposite the first set of corresponding sensors 260. It is to be understood that although only a small subset of the sensors within the pressure detecting user input device 250 are shown in order to more clearly illustrate certain operational aspects, the pressure detecting user input device 250 may have similar electrical sensors located across the entire inner surface of the deformable surface 204 and the base 202.

The first set of corresponding sensors 260 includes five base sensors, or base conductors, including a first base sensor 210, a second base sensor 212, a third base sensor 214, a fourth base sensor 216, and a fifth base sensor 218. The first set of corresponding sensors 260 also includes five surface sensors, or surface conductors, including a first surface sensor 220, a second surface sensor 222, a third surface sensor 224, a fourth surface sensor 226, and a fifth surface sensor 228. In various examples, a processor 252 determines, at different times, the capacitance between each of the base sensors and one or more surface sensors. Based on this measured capacitance, the distance between the base 202 and the deformable surface 204 is determined in the vicinity of those sensors.

In one example, the capacitance between the first base sensor 210 and only the first surface sensor 220 is determined. In another example, the respective capacitance values between the first base sensor 210 and each of the five surface sensors is determined. In this later example, an AC signal is delivered to the first base sensor 210 and a received signal is measured at each of the first surface sensor 220, the second surface sensor 222, the third surface sensor 224, the fourth surface sensor 226 and the fifth surface sensor 228. The respective capacitance between the first base sensor 210 and each of the surface sensors is determined based upon the differences between the magnitude of the signal delivered to the first base sensor 210 and the respective magnitudes of the signals measured at each of the surface sensors. Similar measurements are made to determine the capacitances between each of the base sensors, e.g., the second base sensor 212, the third base sensor 214, the fourth base sensor 216, and the fifth base sensor 218, and one or more corresponding surface sensors.

Each base sensor is defined to have one or more corresponding surface sensors. For a particular base sensor, a corresponding surface sensor is a sensor that is located in a position on the deformable surface 204 that is approximately "above" that particular base sensor. In other words, the sensor on the deformable surface 204 is in proximity to the corresponding sensor on the bottom portion in a projection of the deformable surface 204 onto the base plane formed by the base 202. Based upon the design of various examples, capacitances are measured either between each base sensor and one corresponding surface sensor, or capacitances are measured between each base sensor and a number of corresponding surface sensors. In the latter example, the number of measured capacitances may be averaged. It is to be noted that each surface sensor also has one or more corresponding base sensors, where corresponding base sensors are base sensors that are approximately "below" that surface sensor. In other words, the corresponding base sensor is in proximity to the surface sensor in a projection of the deformable surface 204 onto the base plane formed by the base 202.

The first set of corresponding sensors 260 is located in proximity to a left side of the pressure detecting user input device 250 as illustrated in FIG. 2. Detecting a decrease in the distance between the base sensors and the surface sensors in the first set of corresponding sensors 260, such as by measuring an increase in capacitance, detects a depression of the left side of the deformable surface 204.

The second set of corresponding sensors 262 includes three base sensors, including a sixth base sensor 234, a seventh base sensor 236, and an eighth base sensor 238. The second set of corresponding sensors 262 also includes three surface sensors, including a sixth surface sensor 244, a seventh surface sensor 246, and an eighth surface sensor 248. The second set of corresponding sensors is located in proximity to a central area of the pressure detecting user input device 250. Detecting a decrease in the distance between the base sensors and the surface sensors in the second set of corresponding sensors 262, such as by measuring an increase in capacitance, will detect a depression of the central area of the deformable surface 204.

The third set of corresponding sensors 264 includes two base sensors, including a ninth base sensor 230, and a tenth base sensor 232. The third set of corresponding sensors 264 also includes two surface sensors, including a ninth surface sensor 240, and a tenth surface sensor 242. The third set of corresponding sensors 364 is located in proximity to a right side of the pressure detecting user input device 250 as illustrated in FIG. 2. Detecting a decrease in the distance between the base sensors and the surface sensors in the third set of corresponding sensors 264, such as by measuring an increase in capacitance, will detect a depression of the right side of the deformable surface 204.

It is to be noted that a depression of the left side of the deformable surface 204 is able to cause an increase in the distance between the base sensors and the surface sensors of the second set of corresponding sensors 262 and the third set of corresponding sensors 264. This increase in distance is caused by the dielectric material within the volume 208 being displaced from the portion of the volume 208 that is under the left side of the deformable surface 204 to the remaining portions of the volume 208.

Alternative examples use different techniques to determine a distance between the base 202 and the deformable surface 204. In one example, the volume 208 is filled with an ohmically conductive material that conducts an electrical current. In this example, the ohmic resistance between conductive sensors on the base 202 and the deformable surface 204 is measured. Based on the known resistivity characteristics per unit volume of the conductive material filling the volume 208, the distance between those conductive sensors is able to be determined.

Another example places sensors across the base 202 but does not have sensors physically coupled to the deformable surface 204. This example takes advantage of the conductive nature of a person's finger to use the person's finger alone as one conductive surface of a capacitor formed by the finger and a sensor on the base 202. In this example, a low level AC voltage is applied to one or more sensors on the base 202 and the current flowing into that sensor is determined. The low level current flow is controlled by the impedance between that sensor and the person's finger, which is assumed to have an AC voltage potential of zero relative to the AC signal begin applied to the sensor. The capacitance of the capacitor formed by the sensor on the base 202 and a person's finger pressing on the deformable surface 204 is a function of the dielectric constant of the dielectric material in the volume 208 and the distance between the sensor on the base 202 and the deformable surface 204, which is varied as the user varies the pressure used to depress the deformable surface 204. One example operates by measuring changes in this capacitance level, which reflects changes in the distance between the base 202 and deformable surface 204 due to pressing by that finger.

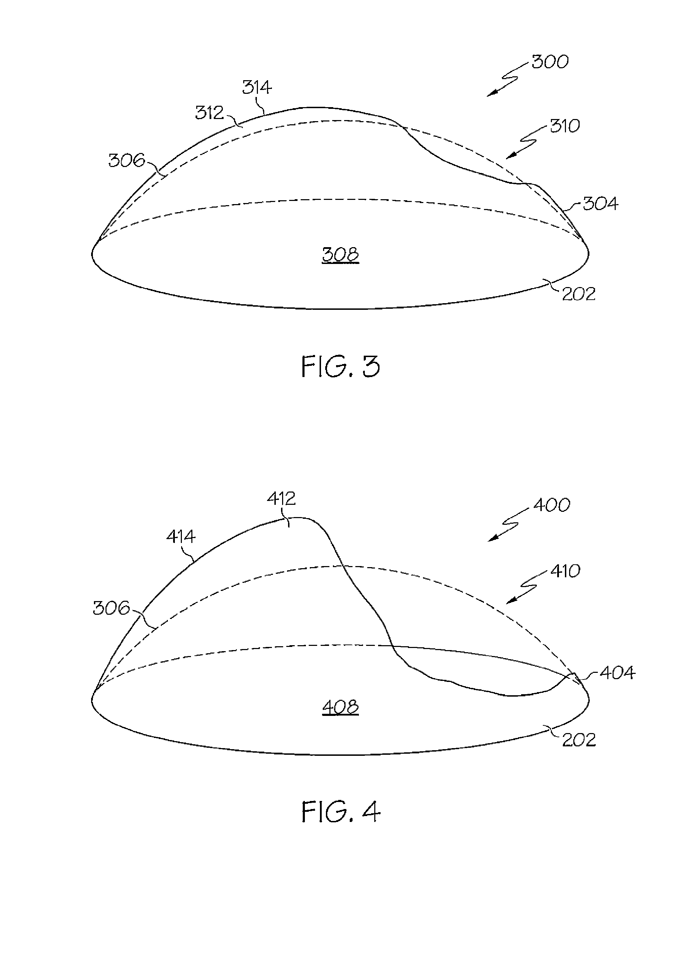

FIG. 3 illustrates a slightly deformed pressure detecting user input device 300, according to one example. The slightly deformed pressure detecting user input device 300 is similar to the pressure detecting user input device 250 described above. The slightly deformed pressure detecting user input device 300 has a slightly deformed deformable surface 304 that is attached to a base 202. A volume 308 defined by the slightly deformed deformable surface 304 and the base 302 is filled with a dielectric gel, as described above.

As depicted in FIG. 3, the slightly deformed pressure detecting user input device 300 has a slightly deformed deformable surface 304 that has a slight depression 310 on its right side. The slightly deformed pressure detecting user input device 300 shows a dashed, un-depressed line 306 that indicates the position of the slightly deformed deformable surface 304 when no pressure is applied to that slightly deformed deformable surface 304.

The slight depression 310 is formed by, for example, a user's pressing on that area of the slightly deformed deformable surface 304 with a finger or stylus. The surface of the slightly deformed deformable surface 304 is lower than that un-depressed line 306 in that area. Creating the slight depression 310 displaces the dielectric gel that was within the portion of the volume 308 that becomes the slight depression 310. This displayed dielectric gel moves to other areas under the slightly deformed deformable surface 304 and further distorts the form of the slightly deformed deformable surface 304. For example, on a side of the slightly deformed pressure detecting user input device 300 that is opposite the slight depression 310, a raised surface area 314 is created by the dielectric gel that is displaced from the portion of the volume 308 that was removed to create the slight depression 310. The raised surface area 314 is above the un-depressed line 306 and creates an additional volume 312. In various examples, sensors on the base 202 and the slightly deformed deformable surface 304 determine the depth and contour of the slight depression 310 and the raised surface area 314. For example, a processor measures the capacitance between all of the small sensors that are located continuously across the base 202 and the slightly deformed deformable surface 304. The distance between the base 202 and the slightly deformed deformable surface 304 at the location of each of these numerous sensors is able to be determined based upon the measured capacitance values between these sensors.

FIG. 4 illustrates a highly deformed pressure detecting user input device 400 in accordance with one example. The highly deformed pressure detecting user input device 400 is similar to the pressure detecting user input device 250 described above. The highly deformed pressure detecting user input device 400 has a highly deformed deformable surface 404 that is attached to a base 402. A volume 408 is defined by the highly deformed deformable surface 404 and the base 202 and is filled with a dielectric gel, as described above.

The highly deformed pressure detecting user input device 400 in one example represents a device that is similar to the slightly deformed pressure detecting user input device 300 after a user continues pressing down on the slight depression 310 with additional force. The additional force applied to the slight depression 310 creates the deep depression 410 on the right side, as depicted in FIG. 4. The highly deformed pressure detecting user input device 400 shows an un-depressed line 306 that indicates the position of the highly deformed deformable surface 404 when no pressure is applied to that flexible surface.

The deep depression 410 is formed, for example, by a user's pressing harder on the area of the slightly deformed deformable surface 304 with a finger or stylus. The surface of the highly deformed deformable surface 404 is much lower than that un-depressed line 306 in that area than it was with the slight depression 310. Creating the deep depression 410 displaces even more the dielectric gel that was within the portion of the volume 408 that becomes the deep depression 410. This additional displaced dielectric gel, with respect to the displaced dielectric gel of the slightly deformed pressure detecting user input device 300, also to the other areas under the highly deformed deformable surface 404 and further distorts the form of the highly deformed deformable surface 404. For example, on a side of the highly deformed pressure detecting user input device 400 that is opposite the deep depression 410, a raised surface area 414 is created by the dielectric gel that is displaced from the portion of the volume 408 that was removed to create the deep depression 410. The raised surface area 414 is above the un-depressed line 306 and creates an additional volume 412. In various examples, sensors on the base 202 and the highly deformed deformable surface 404 determine the depth and contour of the deep depression 410 and the raised surface area 414. For example, a processor measures the capacitance between all of the small sensors that are located continuously across the base 202 and the highly deformed deformable surface 404. The distance between the base 202 and the highly deformed deformable surface 404 at the location of each of these numerous sensors is able to be determined based upon the measured capacitance values between these sensors. Various processing techniques are then able to estimate a point and depth of depression such as simply estimating a point of minimum distance between the base 202 and highly deformed deformable surface 404, or a more complex processing technique analyzes, for example, a contour of some or all of the highly deformed deformable surface 404.

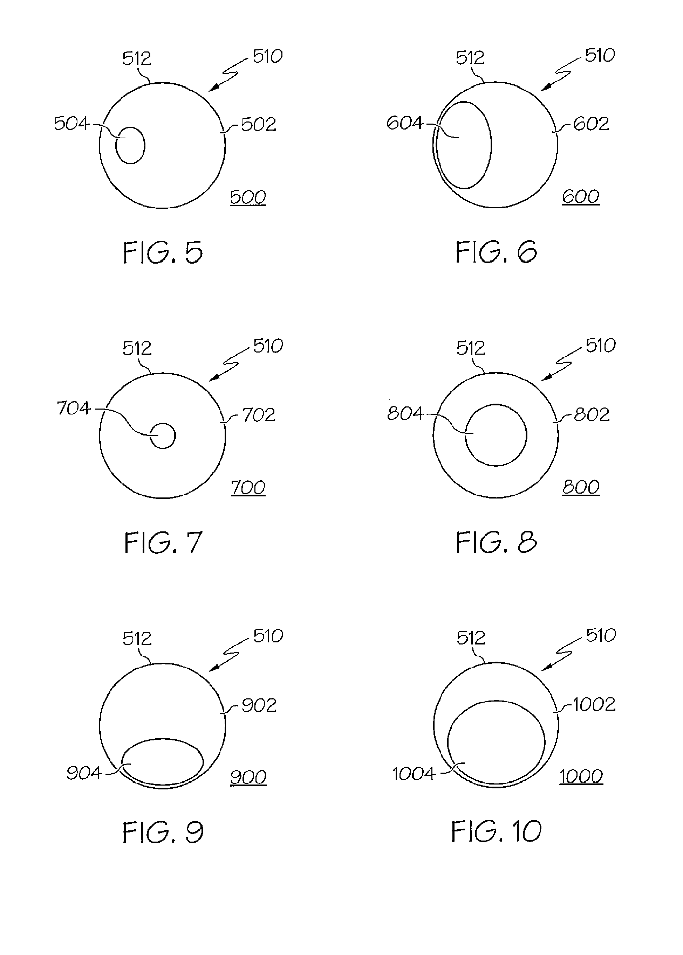

FIGs 5 through 10 depict six top views of a pressure detecting user input device 510 that has different amounts of pressure applied at various locations. In one example, the pressure is applied by a user's finger or stylus. In the illustrated example, the pressure detecting user input device has a relatively small diameter base that extends to a circular rim 512. The diameter of the base that extends to the circular rim 512 is approximately twice the size of an expected contact area of a user's finger with the deformable surface of the pressure detecting user input device 510. A pressure detecting user input device 510 with a diameter approximately twice the expected area of a user's finger allows a very small sized device to be effectively used to accept two-dimensional input comprising both a two dimensional direction component and a magnitude. In conventional user input device, such as trackpads, the magnitude of a two-dimensional input is provided by a user's continuing to drag his or her finger in the specified direction. In such conventional systems, a small magnitude is indicated by a small dragging distance and a large magnitude is indicated by a longer dragging distance in the specified direction. In the illustrated pressure detecting user input device, the specified direction is indicated by the location of the pressure on the deformable surface of the pressure detecting user input device, and the magnitude is indicated by an amount of pressure applied in that location.

The input direction and magnitude indicted by pressing on the pressure detecting user input device 510 is able to be used to control, for example, various user interface operations such as modifying a user interface display presentation. Examples of user interface operations controlled by pressing the pressure detecting user input device 510 include: controlling movement of a graphical user interface cursor, such as an arrow, across a user interface display presentation; panning a graphical user interface display presentation to view different parts of an image that lie beyond the border of a presently presented image; zooming an image on a user interface display presentation; scrolling down a list of items; and indicating a user selection.

The pressure detecting user input device 510 depicted in FIGs. 5 through 10 is similar to the pressure detecting user input device 110 described above. The pressure detecting user input device 510 has a base that extends to a circular rim 512 and has a deformable surface that is depicted in these figures with depressions at different locations and of different depths. The pressure detecting user input device 510 is similarly physically coupled to a portable electronic device 100, where the up direction in FIGs. 5 through 10 represents the up direction of that portable electronic device as it is normally held by a user. Similarly, the left side, right side and bottom of FIGs. 5 through 10 correspond to the left, right and bottom of the portable electronic device as it is normally held by a user. It is to be understood that the portable electronic device is further able to have an orientation sensing component to detect which direction corresponds to an up direction, and input from the pressure sensitive input device 510 is correspondingly able to be adjusted.

FIG. 5 illustrates a top view of a left horizontal lightly pressed pressure detecting user input device 500, in accordance with one example. The left horizontal lightly pressed pressure detecting user input device 500 shows a deformable surface 502 of the pressure sensitive input device 510 that is lightly depressed on a left side to create a left horizontal light depression 504. The circular rim 512 in this example forms the bond between the deformable surface 502 and the base (not shown) of the left horizontal lightly pressed pressure detecting user input device 500.

A user is able to apply a relatively light pressure to the left side of the pressure sensitive input device 510 to indicate, for example slow movement of a graphical user interface cursor in a left direction on a user display. Slow panning movement of a displayed image on the user interface is also able to be selected by applying the relatively light pressure to the left side of the pressure sensitive input device 510. Other user inputs, as defined by software receiving a specification of the pressure's location and magnitude, are also able to be indicated by a user applying the relatively light pressure to the left side of the pressure sensitive input device 510.

FIG. 6 illustrates a top view of a left horizontal deeply pressed pressure detecting input sensor, in accordance with one example. The left horizontal deeply pressed pressure detecting user input device 600 shows a deformable surface 602 of the pressure sensitive input device 510 that is deeply depressed on a left side to create a left horizontal deep depression 604. The circular rim 512 in this example forms the bond between the deformable surface 602 and the base (not shown) of the left horizontal deeply pressed pressure detecting user input device 600.

A user is able to apply a greater amount of pressure, as compared to the relatively light pressure of the left horizontal lightly pressed pressure detecting user input device 500, to the left side of the pressure sensitive input device 510 to indicate, for example more rapid movement of a graphical user interface cursor in a left direction on a user display. A more rapid panning movement of a displayed image on the user interface is also able to be selected by applying the greater pressure to the left side of the pressure sensitive input device 510. Other user inputs, as defined by software receiving a specification of the pressure's location and magnitude, are also able to be indicated by a user applying a heavier pressure to the left side of the pressure sensitive input device 510.

FIGs. 5 and 6 depict applying two different amounts of pressure to a left side of the pressure sensitive input device 510. It is further clear that a continuously variable amount of pressure is able to be applied to any location of the pressure sensitive input device 510 in order to indicate a continuously variable input magnitude. It is also clear that similar user inputs indicating differing magnitudes in any of 360 degrees of direction are able to be indicated by a user's pressing the pressure sensitive input device 510 in an appropriate location with any desired amount of pressure.

FIG. 7 illustrates a top view of a centrally lightly pressed pressure detecting user input device 700, in accordance with one example. The centrally lightly pressed pressure detecting user input device 700 shows a deformable surface 702 of the pressure sensitive input device 510 that is lightly depressed in its center to create a central light depression 704. The circular rim 512 in this example forms the bond between the deformable surface 702 and the base (not shown) of the centrally lightly pressed pressure detecting user input device 700. A user is able to apply a relatively light pressure to the central area of the pressure sensitive input device 510 to indicate, for example, a "pre-click" input. As defined by software receiving a specification of the centrally applied light pressure, the "pre-click" input is able to cause, for example, an expansion in size of a user interface display image or a pre-click is able to cause a display of a short menu associated with a user interface object indicated by a cursor on a graphical user interface. Expansion of a user interface display may be defined as causing the displayed image to zoom in, i.e., cause the displayed image to expand in the available display area. A light pressure may indicate that the zooming is to be performed slowly. The speed of image zooming may also be proportional to the magnitude of the pressure applied to the central area of the pressure sensitive input device 510.

FIG. 8 illustrates a top view of a centrally deeply pressed pressure detecting user input device 800, in accordance with one example. The centrally deeply pressed pressure detecting user input device 800 shows a deformable surface 802 of the pressure sensitive input device 510 that is deeply depressed on its central area to create a deep central depression 804. The circular rim 512 in this example forms the bond between the deformable surface 802 and the base (not shown) of the centrally deeply pressed pressure detecting user input device 800. A user is able to apply a higher amount of pressure, relative to the centrally lightly pressed pressure detecting user input device 700, to the central area of the pressure sensitive input device 510 to indicate, for example, a "click" input. As defined by software receiving a specification of the centrally applied light pressure, the "click" input is able to cause, for example, more rapid zooming of the displayed image, relative to the centrally lightly pressed pressure detecting user input device 700, or selection of a user interface object indicated by a cursor on a graphical user interface.

FIG. 9 illustrates a top view of a bottom vertical lightly pressed pressure detecting user input device 900, in accordance with one example. The bottom vertical lightly pressed pressure detecting user input device 900 shows a deformable surface 902 of the pressure sensitive input device 510 that is lightly depressed on its lower part to create a lower light depression 904. The circular rim 512 in this example forms the bond between the deformable surface 902 and the base (not shown) of the bottom vertical lightly pressed pressure detecting user input device 900. A user is able to apply a relatively light pressure to the lower area of the pressure sensitive input device 510 to indicate, for example, that the user display should slowly scroll in a vertical direction. As defined by software receiving a specification of the relatively light pressure to the lower area of the pressure sensitive input device 510, this input, which is associated with slowly scrolling, is able to cause the displayed image to scroll or the selected entry of a displayed menu on a display to slowly move down the displayed menu entries. The speed of scrolling may also be proportional to the magnitude of the pressure applied to the lower area of the pressure sensitive input device 510.

FIG. 10 illustrates a top view of a bottom vertical deeply pressed pressure detecting user input device 1000, in accordance with one example. The bottom vertical deeply pressed pressure detecting user input device 1000 shows a deformable surface 1002 of the pressure sensitive input device 510 that is deeply depressed on its lower part to create a lower deep depression 1004. The circular rim 512 in this example forms the bond between the deformable surface 1002 and the base (not shown) of the bottom vertical deeply pressed pressure detecting user input device 1000. A user is able to apply a higher amount of pressure, relative to the bottom vertical lightly pressed pressure detecting user input device 900, to the lower part of the pressure sensitive input device 510 to indicate, for example, performing a faster scroll of the displayed image, or to indicate a menu selection.

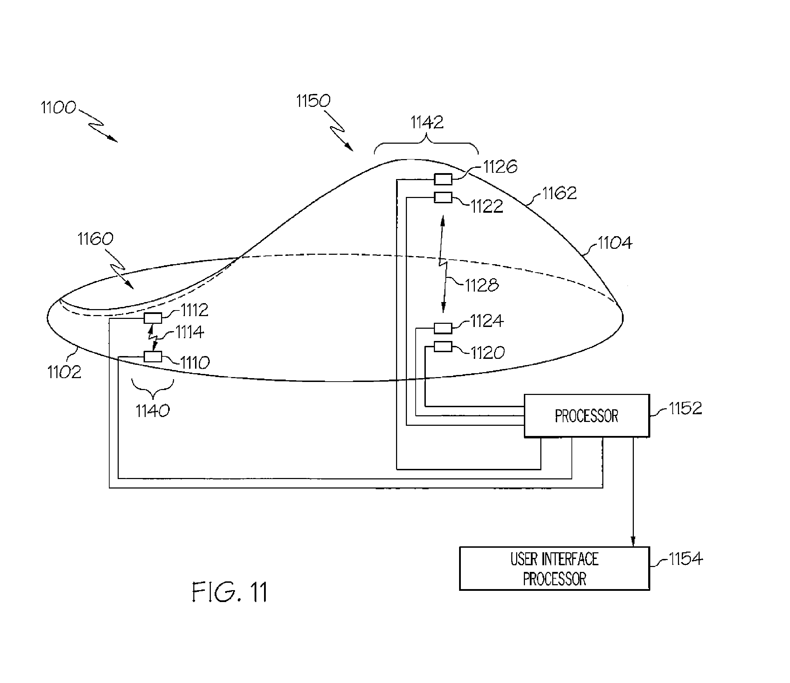

FIG. 11 illustrates a capacitance determination configuration 1100, in accordance with one example. The capacitance determination configuration 1100 depicts a pressure detecting user input device 1150 that has a base 1102 and a deformable surface 1104. The base 1102 and deformable surface 1104 are similar to the base 202 and the deformable surface 204 discussed above. The deformable surface 1104 is shown to have a depression 1160, such as is created by a user's pressing on the deformable surface 1104 with his or her finger.

The capacitance determination configuration 1100 illustrates two respective subsets of conductors. These two respective subsets of conductors correspond to two sets of sensors, a first set of sensors 1140 and a second set of sensors 1142, that are physically coupled to the pressure detecting user input device 1150. In each set of sensors, a subset of sensors is physically coupled to the base 1102 and a subset of sensors consisting of the other sensors in the set of sensors is physically coupled to the deformable surface 1104. These sensors are all electrically connected to a processor 1152 to support capacitance measurement between selected sensors. The processor 1152 measures changes in capacitances between sensors in the two subsets of each of the illustrated set of sensors due to the change of distance between the base 1102 and the deformable surface 1104 in the area of each set of sensors. Due to the pressure applied to the deformable surface 1104 and the location of that applied pressure, the processor 1152 determines a change in distance between sensors in each of the subsets of sensors.

Based upon the changes in distances between the sensors at various locations of the pressure detecting user input device 1150, the processor 1152 determines a user input direction value and a user input magnitude value. The user input direction is, for example, a user input reflecting in which direction to move a user interface object. A user input direction is analogous to the direction in which a user moves a mouse or trackball. The processor 1152 in this example determines the user input direction based upon the location on the deformable surface 1104 of the applied pressure relative to the center of the pressure detecting user input device 1150. The user input magnitude value is a user input reflecting a magnitude of input provided by the user. The user input magnitude is analogous to the distance that a user moves a mouse in the user input direction, or the amount that a user rolls a trackball. The processor 1152 in this example determines the user input magnitude based upon the amount of applied pressure applied to the deformable surface 1104, which is proportional to the change in distance between the base 1102 and the deformable surface 1104 in the vicinity of the applied pressure.

The processor 1152 provides the values of the user input direction and the user input magnitude to a user interface processor 1154. In one example, the processor 1152 produces a signal that indicates the estimated location and the change in distance between the base 1102 and the deformable surface 1104. Such a signal is able to be a signal communicated over a digital communications interface that is encoded with values that indicate the estimated location and the estimated changes in one or more distances between the base 1102 and the deformable surface 1104. The values encoded in the signal are able to vary in proportion with the estimated changes in distances, so that actions are able to be taken in proportion to the amount of pressure exerted on the deformable surface 1104 by a user.

The user interface processor 1154 is configured to receive the signal indicating the estimated location and change in direction of a depression on the deformable surface 1104. The user interface processor 1154 responds to the user input direction value and user input magnitude value received from the processor 1152 according to, for example, a mode in which the user interface processor 1154 is operating. As described above, the user interface processor 1154 is able to zoom a displayed image, move a cursor across a graphical user interface display, scroll a display or menu selection, or pan a displayed image.

The first set of sensors 1140 includes a first base sensor 1110 physically coupled to the base 1102 and a first surface sensor 1112 physically coupled to a deformable surface 1104. The deformable surface 1104 is depressed at a depression 1160. The depression 1160 is created, for example, by a user pressing the deformable surface 1104 in that area. A first distance 1114, which is the distance between the first base sensor 1110 and the first surface sensor 1112, has an electric field coupling the first base sensor 1110 and the first surface sensor 1112. The first distance 1114 is determined by the processor 1152 by measuring the capacitance between those two sensors. As described above, the distance between the deformable surface 1104 and the base 1102 is decreased by, for example, a user's pressing on the deformable surface in that area.

The second set of sensors 1142 includes a second base sensor 1120 and a third base sensor 1124 that are physically coupled to the base 1102. The second set of sensors 1142 also includes and a second surface sensor 1122 and a third surface sensor 1126 physically coupled to a deformable surface 1104. The deformable surface 1104 is raised in the area of the second set of sensors 1142 because the dielectric gel between the base 1102 and the deformable surface 1104 is displayed from the depression 1160. In one example, a second distance 1128 has electric fields coupling the second base sensor 1120 and the second surface sensor 1122 as well as the third base sensor 1124 and the third surface sensor 1126. The first distance 1114 is determined based on a measured capacitance between the second base sensor 1120 and the second surface sensor 1122 in combination with a measured capacitance between the third base sensor 1124 and the third surface sensor 1126. For example, these measured capacitances are used to determine corresponding distances and those distances are able to be averaged or otherwise combined to provide a value of the second distance 1128.

Although only two set of sensors are illustrated, as is described above it is to be understood that sensors are able to be physically coupled across the entire surface of the base 1102 and the deformable surface 1104 of the pressure detecting user input device 1150 and that the processor 1152 is able to monitor capacitances between all of the sensors on one of those surfaces and selected corresponding sensors on the other of those surfaces. The processor 1152 in one example estimates a contour of the deformable surface 1104 relative to the base 1102 by measuring the capacitances between the multiple sensors that are located across the base 1102 and the deformable surface 1104. Changes in the contour of the deformable surface 1104 relative to the base 1102 are also able to be estimated based on measured changes in capacitances between the sensors on those two surfaces.

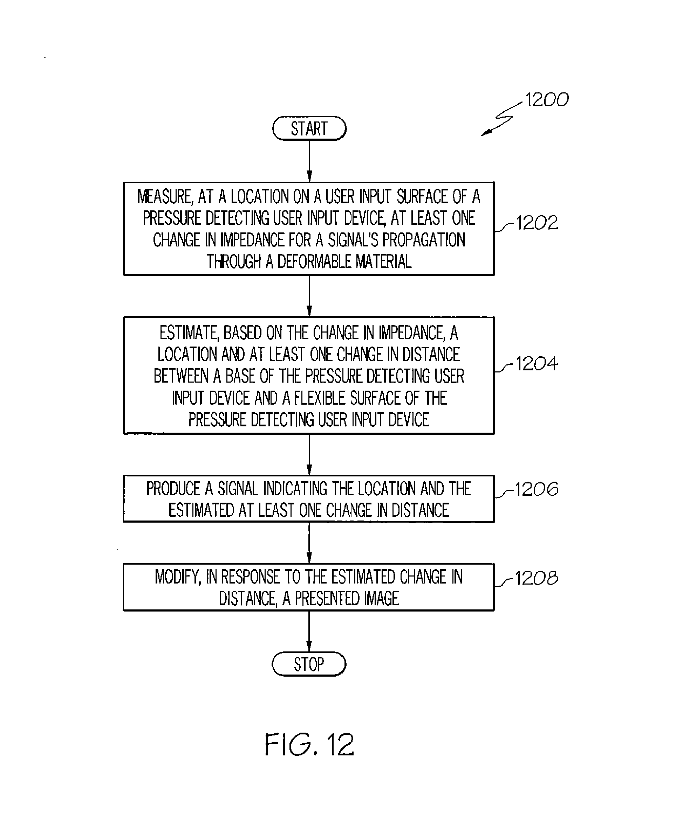

FIG. 12 illustrates a pressure detecting user input device operating process 1200, in accordance with one example. The pressure detecting user input device operating process 1200 operates in conjunction with, for example, a pressure detecting user input device 250 as is depicted in FIG. 2. With reference to the components depicted in FIG. 2, the pressure detecting user input device operating process 1200 operates to characterize depressions of the deformable surface 204 with respect to the base 202. The pressure detecting user input device operating process 1200 is one example of processing to operate the pressure detecting user input device 250 and it is clear that variations thereof are able to be used in conjunction with similar pressure detecting user input devices.

The following description refers to elements of the pressure detecting user input device 250 depicted above in FIG 2. In the pressure detecting user input device 250 depicted in FIG. 2, the deformable surface 204 is an example of a user input surface. The pressure detecting user input device operating process 1200 begins by measuring, at 1202, at least one change in impedance for a signal's propagation through a deformable material at a location on a user input surface of a pressure detecting user input device. In an example, the change in impedance is measured for a signal propagating from at least one sensor to at least one other sensor. The at least one sensor in this example is located on a first end of the pressure detecting user input device and the at least one other sensor is located on a second end of the pressure detecting user input device, where the second end is opposite the first end. In another example, the change in impedance is measured for a signal propagating from the at least one sensor to a conductive object on the second end of the pressure detecting user input device. An example of a conductive object is a user's finger pressing on the deformable surface 204.

In the example of FIG. 2, the first end of the pressure detecting user input device 250 corresponds to the base 202 and the second end corresponds to the deformable surface 204. In another example, the first end of the pressure detecting user input device 250 corresponds to the deformable surface 204 and the second end corresponds to the base 202. The measurement of changes in impedance is able to be in the form of a measured change in capacitance, resistance, or a combination of both. In one example, an array of electrically conductive sensors are placed on the both the inside of the base 202 and the deformable surface 204. The base 202 and deformable surface 204 enclose a deformable dielectric material within the volume 208 and as the distance between the sensors changes, the capacitance between these conductors changes. A processor 252 places one or more alternating current (AC) signal on each the sensors of one end of the pressure detecting user input device 250, which can be each of the sensors that are located on either the base 202 or, alternatively, each of the sensors on the deformable surface 204. Further examples are able to place signal on sensors that are located on both the base 202 and the deformable surface 204. The processor 252 measures the strength of signals received by sensors on the other end of the pressure detecting user input device, which are sensors on either the base 202 or deformable surface 204 that are not sending the AC signal. Based on the strength of the received signals, the capacitance between the two sensors, which includes the conductive surface of those sensors as well as the dielectric material of the deformable dielectric material within the volume 208, is able to be estimated. Changes in received signal strength by sensors on the other end of the pressure detecting user input device reflect changes in impedance between the sending sensor and the receiving sensor. An alternative example places a deformable conductive material within the volume 208 between the deformable surface 204 and the base 202, and an AC or Direct Current (DC) signal is used to measure the ohmic conductance between one or more sensors on the deformable surface 204 and one or more sensors on the base 202.

In some examples, different signals are placed on each of the multiple sensors located across one end of the pressure detecting user input device. For example, the processor 252 is able to sequentially provide a signal to only one sensor on the base 202 at a time until all sensors on the base 202 have been provided with a signal. In this example, the processor 252 measures the strength of signals received by sensors at various locations on the deformable surface 204 whiles signals are provided to the sensors on the base 202. For example, the processor measures the strength of signals received by one or more sensors on the deformable surface 204 that are approximately above the sensor on the base 202 that is sending the signal. Each sensor on the base 202 is then sequentially provided with a signal and the appropriate sensors on deformable surface 204 are monitored.

In another example, sensors are distributed across the base 202 and not across the deformable surface 204. In such an example, a user's fmger is able to be placed on the deformable surface 204 and act as a grounded conductor to which an AC signal is able to be coupled from sensors on the base 202. As a user depresses the deformable surface 204, the finger pressing on the deformable surface 204 becomes closer to the base 202 and the transmitting sensors thereon. The AC signal transmitted from the sensors on the base 202 travels a shorter distance through the deformable dielectric material within the volume 208 and therefore there is less impedance between sensors on the base 202 and the finger depressing the deformable surface 204 than when the finger is simply resting on the deformable surface 204 without depressing it. By identifying which sensor on the base 202 has the least impedance to a grounded conductor, the location of the finger's location on a projection of the deformable surface 204 onto the base plane formed by the base 202 is able to be determined.

In one example, the processor 252 performs measurements of impedance changes between sensors located at many locations across the base 202 and the deformable surface 204. The processor assembles these multiple impedance change measurements in order to create an impedance change profile. This impedance change profile is able to be processes by various techniques to estimate one or more locations of depressions on the deformable surface 204.

Further examples are able to use any structure and incorporate any suitable transducers that determine a pressure exerted on one surface of a pressure sensing input device. In various examples, the pressure exerted on a surface is measured by determining differences in state and relative position of two surfaces. These differences are able to be determined by transducers that determine, for example, one or more of pressure, capacitive changes between sensors, resistive changes between sensors, or changes in the distance between the two surfaces of the device.

The pressure detecting user input device operating process 1200 continues by estimating, at 1204, a location and at least one change in distance between the base of the pressure detecting user input device and the flexible surface of the pressure detecting user input device. The location is estimated based on one of the above described measurements of a change in impedance. The amount and direction of change in impedance provides an indication of the change in distance between the base 202 and the deformable surface 204 and whether the distance between these two surfaces increases or decreases. A decrease in impedance, such as an increase in measured capacitance or a decrease in resistance, indicates that the distance between these two surfaces has decreased during the time of the change in impedance. An increase in impedance indicates that the distance has increased during the time of the change.

The processor 252 of one example is configured with information defining the location of each sensor on the base 202 and the deformable surface 204. Based on the configured information defining the location of each sensor, and measuring a change in impedance between particular sensors on the base 202 and the deformable surface 204, the processor 252 is able to estimate a location of, for example, a depression of the deformable surface 204 that causes the change in impedance between those two sensors.

In one example, a contour of the deformable surface 204 or an amount of change in the contour of the deformable surface 204 is able to be estimated by the processor 252. Further processing by the processor 252, such as curve fitting, time domain filtering of measured changes, and the like, is able to improve the reliability of the estimated location and magnitude of the user's pressing of the deformable surface 204.

The pressure detecting user input device operating process 1200 continues by producing, at 1206, a signal indicating the estimated location and the estimated at least one change in distance. This signal is able to be, for example, a digital communications signal encoded with the estimated values. Further examples are able to produce, for example, analog voltage levels that are provided to control circuitry.

The pressure detecting user input device operating process 1200 continues by modifying, at 1208, a presented image in response to the estimated change in distance. The modification of the presented image is able to include, for example, moving a user input cursor across a screen, zooming an image in or out, presenting a user's menu or selecting different elements of a user's menu, and other image manipulations that a user is able to control. Modification of an image is only one example of applications of user inputs detected by the pressure detecting user input device 250. Further examples are able to provide the user inputs detected by the pressure detecting user input device 250 as inputs to any suitable processing.

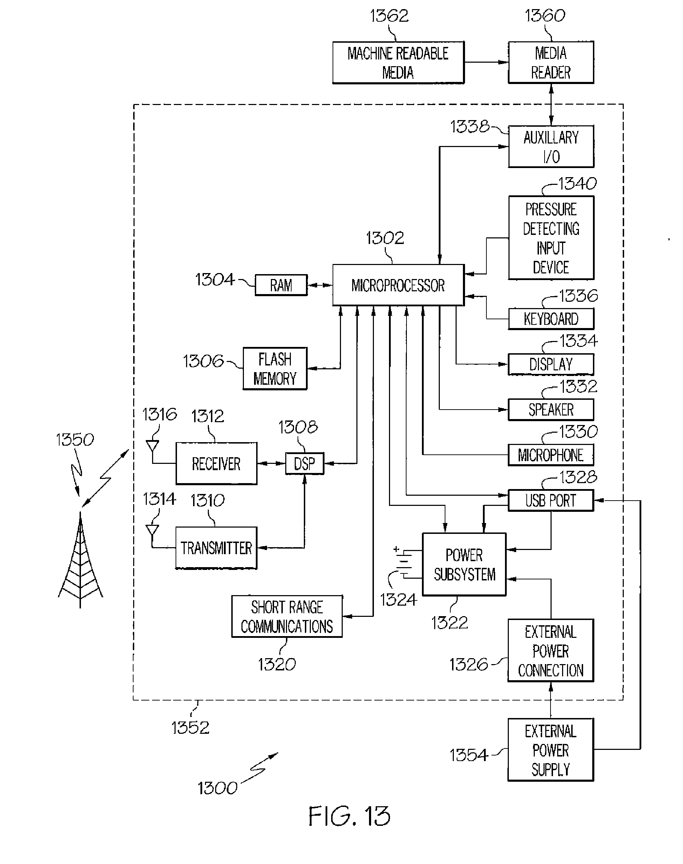

FIG. 13 is a block diagram of an electronic device and associated components 1300 in which the systems and methods disclosed herein may be implemented. In this example, an electronic device 13 52 is a wireless two-way communication device with voice and data communication capabilities. Such electronic devices communicate with a wireless voice or data network 1350 using a suitable wireless communications protocol. Wireless voice communications are performed using either an analog or digital wireless communication channel. Data communications allow the electronic device 1352 to communicate with other computer systems via the Internet. Examples of electronic devices that are able to incorporate the above described systems and methods include, for example, a data messaging device, a two-way pager, a cellular telephone with data messaging capabilities, a wireless Internet appliance or a data communication device that may or may not include telephony capabilities.

The illustrated electronic device 1352 is an example electronic device that includes two-way wireless communications functions. Such electronic devices incorporate communication subsystem elements such as a wireless transmitter 1310, a wireless receiver 1312, and associated components such as one or more antenna elements 1314 and 1316. A digital signal processor (DSP) 1308 performs processing to extract data from received wireless signals and to generate signals to be transmitted. The particular design of the communication subsystem is dependent upon the communication network and associated wireless communications protocols with which the device is intended to operate.

The electronic device 1352 includes a microprocessor 1302 that controls the overall operation of the electronic device 1352. The microprocessor 1302 interacts with the above described communications subsystem elements and also interacts with other device subsystems such as flash memory 1306 and random access memory (RAM) 1304. The flash memory 1306 and RAM 1304 in one example contain program memory and data memory, respectively. The microprocessor 1302 also interacts with an auxiliary input/output (I/O) device 1338, a Universal Serial Bus (USB) Port 1328, a display 1334, a keyboard 1336, a pressure detecting input device 1340, a speaker 1332, a microphone 1330, a short-range communications subsystem 1320, a power subsystem 1322, and any other device subsystems.

In one example, the microprocessor 1302 includes a processor and a user interface processor similar to the processor 1152 and the user interface processor 1154 discussed above. The pressure detecting user input device 1340 is similar to the pressure detecting user input device 250 or pressure detecting user input device 110, discussed above.

A battery 1324 is connected to a power subsystem 1322 to provide power to the circuits of the electronic device 1352. The power subsystem 1322 includes power distribution circuitry for providing power to the electronic device 1352 and also contains battery charging circuitry to manage recharging the battery 1324. The power subsystem 1322 includes a battery monitoring circuit that is operable to provide a status of one or more battery status indicators, such as remaining capacity, temperature, voltage, electrical current consumption, and the like, to various components of the electronic device 1352.

The USB port 1328 further provides data communication between the electronic device 1352 and one or more external devices. Data communication through USB port 1328 enables a user to set preferences through the external device or through a software application and extends the capabilities of the device by enabling information or software exchange through direct connections between the electronic device 1352 and external data sources rather then via a wireless data communication network.

Operating system software used by the microprocessor 1302 is stored in flash memory 1306. Further examples are able to use a battery backed-up RAM or other non-volatile storage data elements to store operating systems, other executable programs, or both. The operating system software, device application software, or parts thereof, are able to be temporarily loaded into volatile data storage such as RAM 1304. Data received via wireless communication signals or through wired communications are also able to be stored to RAM 1304. As an example, a computer executable program configured to perform the pressure detecting user input device operating process 1200, described above, is included in a software module stored in flash memory 1306.

The microprocessor 1302, in addition to its operating system functions, is able to execute software applications on the electronic device 1352. A predetermined set of applications that control basic device operations, including at least data and voice communication applications, is able to be installed on the electronic device 1352 during manufacture. Examples of applications that are able to be loaded onto the device may be a personal information manager (PIM) application having the ability to organize and manage data items relating to the device user, such as, but not limited to, e-mail, calendar events, voice mails, appointments, and task items. Further applications include applications that have input cells that receive data from a user.

Further applications may also be loaded onto the electronic device 1352 through, for example, the wireless network 1350, an auxiliary I/O device 1338, USB port 1328, short-range communications subsystem 1320, or any combination of these interfaces. Such applications are then able to be installed by a user in the RAM 1304 or a non-volatile store for execution by the microprocessor 1302.

In a data communication mode, a received signal such as a text message or web page download is processed by the communication subsystem, including wireless receiver 1312 and wireless transmitter 1310, and communicated data is provided the microprocessor 1302, which is able to further process the received data for output to the display 1334, or alternatively, to an auxiliary I/O device 1338 or the USB port 1328. A user of the electronic device 1352 may also compose data items, such as e-mail messages, using the keyboard 1336, which is able to include a complete alphanumeric keyboard or a telephone-type keypad, in conjunction with the display 1334 and possibly an auxiliary I/O device 1338. Such composed items are then able to be transmitted over a communication network through the communication subsystem.

For voice communications, overall operation of the electronic device 1352 is substantially similar, except that received signals are generally provided to a speaker 1332 and signals for transmission are generally produced by a microphone 1330. Alternative voice or audio I/O subsystems, such as a voice message recording subsystem, may also be implemented on the electronic device 1352. Although voice or audio signal output is generally accomplished primarily through the speaker 1332, the display 1334 may also be used to provide an indication of the identity of a calling party, the duration of a voice call, or other voice call related information, for example.

Depending on conditions or statuses of the electronic device 1352, one or more particular functions associated with a subsystem circuit may be disabled, or an entire subsystem circuit may be disabled. For example, if the battery temperature is low, then voice functions may be disabled, but data communications, such as e-mail, may still be enabled over the communication subsystem.

A short-range communications subsystem 1320 is a further optional component which may provide for communication between the electronic device 13 52 and different systems or devices, which need not necessarily be similar devices. For example, the short-range communications subsystem 1320 may include an infrared device and associated circuits and components or a Radio Frequency based communication module such as one supporting Bluetooth® communications, to provide for communication with similarly-enabled systems and devices.

A media reader 1360 is able to be connected to an auxiliary I/O device 1338 to allow, for example, loading computer readable program code of a computer program product into the electronic device 1352 for storage into flash memory 1306. In one example, computer readable program code includes instructions for performing the pressure detecting user input device operating process 1200, described above. One example of a media reader 1360 is an optical drive such as a CD/DVD drive, which may be used to store data to and read data from a computer readable medium or storage product such as computer readable storage media 1362. Examples of suitable computer readable storage media include optical storage media such as a CD or DVD, magnetic media, or any other suitable data storage device. Media reader 1360 is alternatively able to be connected to the electronic device through the USB port 1328 or computer readable program code is alternatively able to be provided to the electronic device 1352 through the wireless network 1350.

Information Processing System

The present subject matter can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable. A typical combination of hardware and software could be a general purpose computer system with a computer program that, when being loaded and executed, controls the computer system such that it carries out the methods described herein.

The present subject matter can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Furthermore, the computer readable medium may comprise computer readable information in a transitory state medium such as a network link and/or a network interface, including a wired network or a wireless network, that allow a computer to read such computer readable information.

Non-Limiting Examples

Although specific embodiments of the subject matter have been disclosed, those having ordinary skill in the art will understand that changes can be made to the specific embodiments without departing from the spirit and scope of the disclosed subject matter. The scope of the disclosure is not to be restricted, therefore, to the specific embodiments, and it is intended that the appended claims cover any and all such applications, modifications, and embodiments within the scope of the present disclosure.

## Claims

1. A user input device (250), comprising:
a base (202) extending along a base plane;
a flexible surface (204) located in proximity to the base;
a deformable material (208) located between the base and the flexible surface, the deformable material conforming to at least a portion of the flexible surface; and
at least one sensor (260, 262, 264) physically coupled to at least one of the base and the flexible surface; and
a processor (252), communicatively coupled to the at least one sensor, the processor configured to estimate (1204) a location of a depression of the flexible surface towards the base and to estimate (1204) at least one change in distance at the location between the base and the flexible surface, the processor estimating the at least one change in distance based at least in part upon a change in a signal's propagation through the deformable material between the base and the flexible surface.

2. The user input device of claim 1, wherein the processor is further configured to modify (1208) a user interface display presentation (106) in response to and based upon the at least one change in distance and the location, or
the processor further configured to produce a signal (1206) indicating the location and indicting the at least one change in distance, or
the signal (1206) indicating the at least one change in distance comprising a value that varies in proportion to the at least one change in distance, or
wherein the deformable material comprising a dielectric material (208),
the deformable material in contact with a first side of the flexible surface,
the at least one sensor comprising at least one conductor physically coupled to the base,
the processor configured to estimate the at least one change in distance between the base and the flexible surface by measuring a change in capacitance between the at least one conductor and a conductive surface in contact with a second side of the flexible surface, the second side being opposite the first side.

3. The user input device of any of claims 1 or 2, the deformable material comprising a dielectric material,
the at least one sensor comprising a first conductor (1110) and a second conductor (1112),
the processor configured to estimate the at least one change in distance (1114) between the base and the flexible surface by measuring a change in capacitance comprising a change in an electric field coupling between the first conductor and the second conductor.

4. The user input device of claim 3, the at least one sensor further comprising a plurality of base conductors (1120, 1124) physically coupled to the base, the plurality of base conductors comprising the first conductor,
the at least one sensor further comprising a plurality of surface conductors (1122, 1126) physically coupled to the flexible surface, the plurality of surface conductors comprising the second conductor,
the processor measuring, for each conductor in the plurality of base conductors, a change in capacitance between the each conductor and a respective subset of conductors within the plurality of surface conductors, the respective subset of conductors being associated with the each conductor, or
wherein the first conductor is physically coupled to the base and the second conductor being physically coupled to the flexible surface.

5. The user input device of any of claims 1, 2, 3, or 4, the deformable material comprising a conductive material,
the at least one sensor comprising a first conductor and a second conductor, the processor configured to estimate the at least one change in distance between the base and the flexible surface by measuring a change in resistance comprising a change in an electric field coupling between the first conductor and the second conductor.

6. The user input device of claim 5, the first conductor being physically coupled to the base and the second conductor being physically coupled to the flexible surface.

7. A method, comprising:
estimating (1204), with a processor connected to at least one sensor, a location of a depression of a flexible surface towards a base; and
estimating (1204), with the processor connected to the at least one sensor, at least one change in distance at the location between the base and the flexible surface, the processor estimating the at least one change in distance based at least in part upon a change in a signal's propagation through a deformable material between the base and the flexible surface,
the base (202) extending along a base plane and the flexible surface (204) physically coupled to the base, and
the base and the flexible surface having a deformable material (208) located there between, the deformable material conforming to at least a portion of the flexible surface.

8. The method of claim 7, further comprising:
modifying (1208), a user interface display presentation in response to and based upon the at least one change in distance and the location, or
producing (1206) a signal indicating the location and indicting the at least one change in distance, or
the signal indicating the at least one change in distance comprising a value that varies in proportion to the at least one change in distance, or
wherein the deformable material comprising a dielectric material,
the deformable material in contact with a first side of the flexible surface,
the at least one sensor comprising at least one conductor physically coupled to the base, and
the estimating the at least one change in distance comprising measuring a change in capacitance between the at least one conductor physically coupled to the base and a conductive surface in contact with a second side of the flexible surface, the second side being opposite the first side.

9. The method of any of claims 7 or 8, the deformable material comprising a dielectric material,
the at least one sensor comprising a first conductor (1110) and a second conductor (1112),
the estimating at least one change in distance (1114) comprising measuring a change in capacitance between the first conductor and the second conductor by measuring a change in an electric field coupling between the first conductor and the second conductor.

10. The method of claim 9, the at least one sensor further comprising a plurality of base conductors (1120, 1124) physically coupled to the base, the plurality of base conductors comprising the first conductor,
the at least one sensor further comprising a plurality of surface conductors (1122, 1126) physically coupled to the flexible surface, the plurality of surface conductors comprising the second conductor, and
the estimating at least one change in distance comprising measuring, for each conductor in the plurality of base conductors, a change in capacitance between the each conductor and a respective subset of conductors within the plurality of surface conductors, the respective subset of conductors being associated with the each conductor, or
wherein the first conductor being physically coupled to the base and the second conductor being physically coupled to the flexible surface.

11. The method of claim any of claims 7, 8, 9, or 10, the deformable material comprising a conductive material,
the at least one sensor comprising a first conductor and a second conductor, the estimating at least one change in distance comprising measuring a change in resistance comprising a change in an electric field coupling between the first conductor and the second conductor.

12. The method of claim 11, the first conductor being physically coupled to the base and the second conductor being physically coupled to the flexible surface.

13. A computer program for instructing a computer to perform the method of any one of claims 7, 8, 9, 10, 11, or 12.
